# FASCICULE DE BREVET EUROPEEN

(11) **EP 4 377 164 B1**
(45) Date de publication et mention de la délivrance du brevet: **06.08.2025**
(21) Numéro de dépôt: 22738502.8
(22) Date de dépôt: 11.07.2022
(51) Int. Cl.: B60S 1/48, B60S 1/56

(54) **PROCÉDÉ DE NETTOYAGE DE CAPTEURS DE VÉHICULE**
VERFAHREN ZUR REINIGUNG VON FAHRZEUGSENSOREN
METHOD FOR CLEANING VEHICLE SENSORS

(30) Priorité: 28.07.2021 FR 2108204
(43) Date de publication de la demande: 05.06.2024
(73) Titulaire: VALEO SYSTEMES D'ESSUYAGE, 78322 Le Mesnil Saint Denis (FR)
(72) Inventeur: THEBAULT, Denis, 63500 Issoire (FR); PERET, Adrien, 63500 Issoire (FR); BAUDOUIN, Maxime, 63500 Issoire (FR); GRASSO, Giuseppe, 63500 Issoire (FR); DOLLE, Yoann, 63500 Issoire (FR)
(74) Mandataire: Valeo Visibility
(86) Numéro de dépôt international: PCT/EP2022/069342
(87) Numéro de publication internationale: WO 2023/006403

(56) Documents cités:
- US-A1- 2011 073 142
- US-A1- 2012 117 745
- US-A1- 2019 077 376
- US-A1- 2020 391 702
- US-A1- 2021 001 819

## Description

La présente invention se rapporte à un procédé de nettoyage d'au moins un capteur d'un véhicule. Elle trouve une application particulière mais non limitative dans les véhicules automobiles.

Dans le domaine des véhicules automobiles, notamment dans les véhicules automobiles autonomes ou semi-autonomes, on trouve plusieurs capteurs tels que des lidars, des radars, ou encore des caméras. Ces capteurs permettent notamment de réaliser une fonction de détection de l'environnement du véhicule. Pour que la conduite autonome ou semi-autonome soit la plus efficace et la plus fiable possible, les informations fournies par les capteurs doivent être de la meilleure qualité possible. Il est donc indispensable que les surfaces externes de ces capteurs soient maintenues propres. Il ainsi est nécessaire de pouvoir laver fréquemment lesdites surfaces externes lorsqu'elles sont sales. A cet effet, il existe un procédé de nettoyage de capteurs d'un véhicule, connu de l'homme du métier, qui détecte que la surface à nettoyer est sale, et qui projette un liquide de nettoyage à un débit déterminé et pendant une durée déterminée sur ladite surface pour la nettoyer. Le document US 2020 391 702 A1 montre un procédé de nettoyage de capteurs de véhicules selon l'état de la technique.

Un inconvénient de cet état de la technique antérieur est que les salissures sur la surface à nettoyer peuvent être de différents types. Cela peut être des poussières, du sel, de la boue, du goudron, des impacts d'insectes etc. Or, comme le nettoyage est uniforme, il ne prend pas en compte la variabilité de ces salissures, et souvent la surface n'est pas nettoyée efficacement, même si elle est nettoyée plusieurs fois de suite. Par conséquent, cela dégrade la fonction de détection du capteur ce qui peut mettre en danger les occupants du véhicule notamment lorsque le véhicule est un véhicule autonome ou semi-autonome dont le fonctionnement dépend en grande partie des fonctions de détection de ses différents capteurs.

Dans ce contexte, la présente invention vise à proposer un procédé de nettoyage d'au moins un capteur d'un véhicule qui permet de résoudre les inconvénients mentionnés.

A cet effet, l'invention propose un procédé de nettoyage d'au moins un capteur d'un véhicule, ledit au moins un capteur comprenant une surface à nettoyer, ledit procédé de nettoyage comprenant les étapes de :
- détecter si ladite surface dudit capteur est sale,
- déclencher un compteur de nettoyage si ladite surface est sale,
- activer une phase de nettoyage primaire en fonction d'au moins un paramètre de nettoyage,
- exécuter la phase de nettoyage primaire,
- vérifier si ladite surface est propre,
- si ladite surface est propre suite à ladite phase de nettoyage primaire, réinitialiser ledit compteur de nettoyage et arrêter l'exécution de ladite phase de nettoyage primaire,
- sinon incrémenter ledit compteur de nettoyage, et si ledit compteur de nettoyage est inférieur à un seuil primaire, réitérer ladite phase de nettoyage primaire,
- si ledit compteur de nettoyage est égal audit seuil primaire, arrêter l'exécution de ladite phase de nettoyage primaire et activer une phase de nettoyage secondaire avec ledit au moins un paramètre de nettoyage modifié,
- exécuter ladite phase de nettoyage secondaire,
- vérifier si ladite surface est propre,
- si ladite surface est propre suite à ladite phase de nettoyage secondaire, réinitialiser ledit compteur de nettoyage et arrêter l'exécution de ladite phase de nettoyage secondaire,
- sinon incrémenter ledit compteur de nettoyage et si ledit compteur de nettoyage est inférieur à un seuil secondaire, réitérer ladite phase de nettoyage secondaire, et si ledit compteur de nettoyage est égal audit seuil secondaire, réinitialiser ledit compteur de nettoyage, arrêter l'exécution de ladite phase de nettoyage secondaire, et exécuter une fonction de sécurisation dudit véhicule.

Selon des modes de réalisation non limitatifs, ledit procédé de nettoyage peut comporter en outre une ou plusieurs caractéristiques supplémentaires prises seules ou selon toutes les combinaisons techniquement possibles, parmi les suivantes.

Selon un mode de réalisation non limitatif, ledit au moins un paramètre de nettoyage est :
- un débit d'un fluide de nettoyage primaire,
- une pression d'un fluide de nettoyage primaire,
- une température d'un fluide de nettoyage primaire,
- une composition d'un fluide de nettoyage primaire.

Selon un mode de réalisation non limitatif, ladite phase de nettoyage primaire est réalisée avec un fluide de nettoyage primaire et ladite phase de nettoyage secondaire est réalisée avec un fluide de nettoyage secondaire qui est le même que le fluide de nettoyage primaire ou qui est composé dudit fluide de nettoyage primaire et d'un fluide additionnel.

Selon un mode de réalisation non limitatif, ladite phase de nettoyage primaire est réalisée avec un fluide de nettoyage primaire et ladite phase de nettoyage secondaire est réalisée avec un fluide de nettoyage secondaire différent du fluide de nettoyage primaire.

Selon un mode de réalisation non limitatif, ledit seuil primaire est égal à 3.

Selon un mode de réalisation non limitatif, ledit seuil secondaire est égal à 5.

Selon un mode de réalisation non limitatif, ladite fonction de sécurisation est :
- un message envoyé à une interface homme machine dudit véhicule pour indiquer l'obligation d'une maintenance,
- désactiver la ou les fonctions dudit véhicule qui dépendent d'une détection dudit capteur
- une navigation automatique dudit véhicule sur une base de maintenance

Selon un mode de réalisation non limitatif, ledit seuil primaire et ledit seuil secondaire sont adaptés en fonction de la nature dudit au moins un capteur.

Selon un mode de réalisation non limitatif, ledit seuil primaire et ledit seuil secondaire sont adaptés en fonction de paramètres ambiants.

Selon un mode de réalisation non limitatif, le procédé de nettoyage s'applique à plusieurs capteurs simultanément.

Selon un mode de réalisation non limitatif, la détection comprend une détection du niveau de salissure de la surface.

Selon un mode de réalisation non limitatif, ledit au moins paramètre de nettoyage est modifié en fonction dudit niveau de salissure.

Selon un mode de réalisation non limitatif, ledit au moins un capteur est un lidar, un radar ou une caméra.

Selon un mode de réalisation non limitatif, la phase de nettoyage primaire est une phase de nettoyage normale.

Selon un mode de réalisation non limitatif, la phase de nettoyage secondaire est une phase de nettoyage intensive.

Il est en outre proposé un système de nettoyage d'au moins un capteur d'un véhicule, ledit au moins un capteur comprenant une surface à nettoyer, ledit système de nettoyage comprenant:
- (a) un dispositif de détection configuré pour détecter si ladite surface dudit au moins un capteur est sale ou propre,
- (b) une unité de contrôle électronique configurée pour :
- activer une phase de nettoyage primaire en fonction de paramètres de nettoyage,
- si ladite surface est propre suite à ladite phase de nettoyage primaire, réinitialiser ledit compteur de nettoyage, sinon incrémenter ledit compteur de nettoyage,
- si ledit compteur de nettoyage est égal audit seuil primaire, activer une phase de nettoyage secondaire avec au moins un paramètre de nettoyage modifié,
- si ladite surface est propre suite à ladite phase de nettoyage secondaire, réinitialiser ledit compteur de nettoyage, sinon incrémenter ledit compteur de nettoyage,
- si ledit compteur de nettoyage est égal audit seuil secondaire, réinitialiser ledit compteur de nettoyage et exécuter une fonction de sécurisation dudit véhicule,
- (c) un dispositif de nettoyage configuré pour :
- exécuter ladite phase de nettoyage primaire, réitérer ladite phase de nettoyage primaire si ladite surface n'est toujours pas propre suite à la phase de nettoyage primaire et si ledit compteur de nettoyage est inférieur au seuil primaire,
- arrêter l'exécution de ladite phase de nettoyage primaire si ladite surface est propre suite à la phase de nettoyage primaire ou si ledit compteur de nettoyage est égal audit seuil primaire,
- exécuter ladite phase de nettoyage secondaire,
- réitérer ladite phase de nettoyage secondaire si ladite surface n'est toujours pas propre suite à la phase de nettoyage secondaire et si ledit compteur de nettoyage est inférieur au seuil secondaire, et
- arrêter l'exécution de ladite phase de nettoyage secondaire si ladite surface est propre suite à la phase de nettoyage secondaire ou si ledit compteur de nettoyage est égal audit seuil secondaire.

Ainsi, grâce à ce procédé de nettoyage, le nettoyage de la surface dudit au moins un capteur est adapté au moyen des paramètres de nettoyage et de tests sur l'état de salissure de la surface à nettoyer du capteur. De cette manière, on obtient un nettoyage efficace de la surface du capteur. Le comptage des différentes phases de nettoyage permet d'arrêter un nettoyage lorsqu'il n'est pas efficace. Ainsi, cela évite le gaspillage de fluide de nettoyage en nettoyant continuellement une surface qui ne peut pas être nettoyée même après plusieurs tentatives.

L'invention et ses différentes applications seront mieux comprises à la lecture de la description qui suit et à l'examen des figures qui l'accompagnent :
[Fig.1] est un organigramme d'un procédé de nettoyage d'au moins un capteur d'un véhicule, selon un mode de réalisation non limitatif de l'invention,
[Fig.2] est une figure schématique d'un système de nettoyage d'au moins un capteur d'un véhicule configuré pour mettre en œuvre le procédé de nettoyage de la [Fig.1], ledit système de nettoyage comprenant un dispositif de détection, une unité de contrôle électronique et un dispositif de nettoyage, selon un mode de réalisation non limitatif,
[Fig.3] illustre les fonctions du dispositif de détection, de l'unité de contrôle électronique et du dispositif de nettoyage du système de nettoyage de la [Fig.2], selon un mode de réalisation non limitatif.

Les éléments identiques, par structure ou par fonction, apparaissant sur différentes figures conservent, sauf précision contraire, les mêmes références.

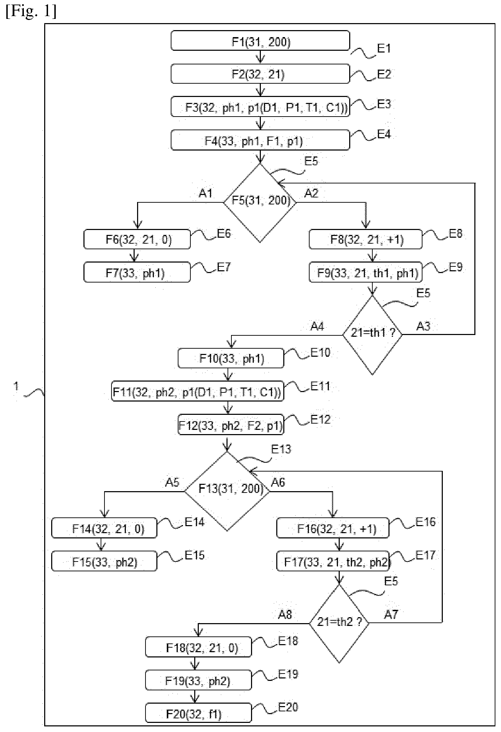

Le procédé de nettoyage 1 d'un capteur 20 d'un véhicule 2 selon l'invention est illustré sur la [Fig.1]. Dans un mode de réalisation non limitatif, le véhicule 2 est un véhicule automobile. Par véhicule automobile, on entend tout type de véhicule motorisé. Ce mode de réalisation est pris comme exemple non limitatif dans la suite de la description. Dans la suite de la description, le véhicule 2 est ainsi autrement appelé véhicule automobile 2. Dans des modes de réalisation non limitatifs, le véhicule automobile 2 est un véhicule autonome ou semi-autonome.

Le véhicule automobile 2 comprend au moins un capteur 20. Dans des modes de réalisation non limitatifs, le capteur 20 est un lidar, un radar ou une caméra. Le capteur 20 comprend une surface externe 200 à nettoyer, autrement appelée surface 200. Dans le cas d'un radar, cette surface externe 200 est traversée par des ondes radars émises et des ondes radars de retour reçues par le radar. Dans le cas d'un lidar, cette surface externe 200 est traversée par un faisceau laser émis et des ondes de retour reçues par le lidar. Dans le cas d'une caméra, cette surface externe 200 représente la surface externe de l'optique de la caméra. Le capteur 20 comprend un seuil de visibilité au-delà duquel il ne peut fonctionner correctement car sa surface externe 200 est trop sale.

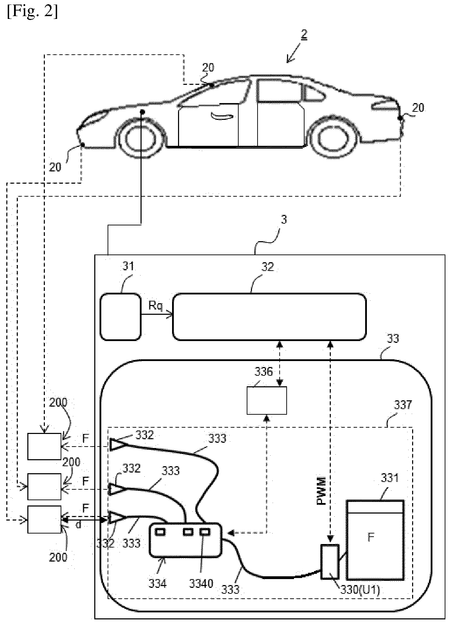

Tel qu'illustré sur la [Fig.2], dans un mode de réalisation non limitatif, le véhicule automobile 2 comprend une pluralité de capteurs 20. Ce mode de réalisation non limitatif est pris comme exemple non limitatif dans la suite de la description. Dans le cadre d'un véhicule automobile 2 autonome ou semi-autonome, il existe des dizaines de capteurs 20. Dans l'exemple non limitatif de la [Fig.2], pour des questions de lisibilité de la figure, seuls trois capteurs ont été représentés, un sur la face avant du véhicule automobile 2, un en haut du pare-brise et un à l'arrière du véhicule automobile 2. On notera que bien entendu des capteurs 20 peuvent être également disposés sur les côtés du véhicule automobile 2. Les capteurs 20 sont configurés pour fournir des informations relatives à l'environnement extérieur du véhicule automobile 2, informations qui sont utilisées pour réaliser des fonctions pour la conduite autonome ou semi-autonome notamment. Dans des exemples non limitatifs, ses informations sont des images de l'environnement extérieur, la présence d'un objet statique ou mobile devant, derrière ou sur les côtés le véhicule automobile 2. Les capteurs 20 sont donc configurés pour réaliser une fonction de détection, que ce soit une détection d'un objet statique ou mobile ou une détection de l'environnement extérieur telles qu'une détection de marquages au sol.

Selon le niveau d'autonomie du véhicule, dans des exemples non limitatifs les fonctions pour la conduite autonome ou semi-autonome comprennent :
- une aide au freinage d'urgence,
- un stationnement automatique avec gestion de la direction,
- un régulateur de vitesse adaptatif sans intervention du conducteur,
- un pilotage du véhicule (contrôle longitudinal et transversal de la trajectoire, maintien du véhicule sur sa voie de circulation et adaptation de sa vitesse au flux des voitures),
- une gestion des déplacements du véhicule sur autoroutes, sur des voiries avec marquage visible,
- un pilotage du véhicule sans intervention du conducteur.

Tel qu'illustré sur la [Fig.2], le véhicule automobile 2 comprend un système de nettoyage 3 comprenant dans un mode de réalisation non limitatif :
- un dispositif de détection 31 configuré pour détecter si la surface 200 à nettoyer dudit capteur est sale 20,
- une unité de contrôle électronique 32, et
- un dispositif de nettoyage 33.

Dans un premier mode de réalisation non limitatif, le dispositif de détection 31 est le capteur 20 lui-même. Ce dernier est configuré pour remonter une information selon laquelle son seuil de visibilité est atteint et ce au moyen d'une requête de nettoyage Rq. Dans un deuxième mode de réalisation non limitatif, le dispositif de détection 31 est ladite une unité de contrôle électronique 32 configurée pour détecter si la surface 200 est sale. Différentes méthodes de détections pour savoir si une surface 200 est sale étant connues de l'homme du métier, elles ne sont pas décrites ici. Sur la [Fig.2], le dispositif de détection 31 a été représenté comme étant différent de l'unité de contrôle électronique 32 ou d'un capteur 20 car il peut être l'un des deux.

Tel qu'illustré sur la [Fig.2], le dispositif de nettoyage 33 comprend dans un mode de réalisation non limitatif :
- au moins une pompe de nettoyage 330 de capteurs 20 configurée pour assurer l'acheminement d'un fluide de nettoyage F dans des canalisations 333 jusqu'à des buses de projection 332,
- au moins un réservoir de stockage 331 configuré pour stocker le fluide de nettoyage F,
- une pluralité de buses de projection 332 configurées pour délivrer le fluide de nettoyage F sur les surfaces externes 200 des capteurs 20,
- une pluralité de canalisations 333 configurées pour acheminer le fluide de nettoyage F dudit au moins un réservoir de stockage 331 jusqu'aux buses de projection 332,
- un module de répartition 334 comprenant une pluralité d'électrovannes 3340 configurées pour distribuer le fluide de nettoyage F vers les capteurs 20 via les buses de projection 332.

L'unité de contrôle électronique 32 est configurée pour piloter ladite au moins pompe de nettoyage 330 et ladite pluralité d'électrovannes 3340.

Dans un mode de réalisation non limitatif, le dispositif de nettoyage 33 comprend en outre un électro-aimant 336, autrement appelé solénoïde, configuré pour ouvrir la pluralité d'électrovannes 3340. Dans ce cas, l'unité de contrôle électronique 32 pilote cet électro-aimant 336.

Dans un exemple non limitatif, le fluide de nettoyage F est de l'eau. La pompe de nettoyage 330, le réservoir de stockage 331, la pluralité de canalisations 333, et le module de répartition 334 forment un circuit de distribution 337 du fluide de nettoyage F. Dans un mode de réalisation non limitatif non illustré, le véhicule automobile 2 comprend deux circuits de distribution 337, un disposé à l'avant et un disposé à l'arrière du véhicule automobile 2. Cela permet de laver simultanément la pluralité de capteurs 20 qui sont situés à l'avant et à l'arrière du véhicule automobile 2 par exemple. Ainsi, dans ce mode de réalisation non limitatif, le véhicule automobile 2 comprend deux réservoirs de stockage 331, un disposé à l'avant et un disposé à l'arrière, et deux pompes de nettoyage 330, une disposée à l'avant et une disposée à l'arrière. Chaque pompe de nettoyage 330 est disposée directement en sortie d'un des réservoirs de stockage 331. Sur la [Fig.2], seul un circuit de distribution 337 a été illustré. Lorsque le véhicule automobile 2 comprend deux circuits de distribution 337, dans ce cas, l'unité de contrôle électronique 32 est configurée pour piloter les deux pompes de nettoyage 330 et ladite pluralité d'électrovannes 3340 des deux circuits de distribution 337.

Dans un mode de réalisation non limitatif, une buse de projection 332 est associée à un capteur 20. On a ainsi autant de buses de projection 332 que de capteurs 20. Une buse de projection 332 est disposée à proximité du capteur 20 auquel elle est associée. Sa distance d par rapport au capteur 20 est fonction de la surface externe 200 du capteur 20 à nettoyer. Plus la surface externe 200 est petite, plus la buse de projection 332 est disposée proche du capteur 20. Dans un mode de réalisation non limitatif, la distance d est comprise entre 1cm (centimètres) et 10cm. Dans un exemple non limitatif, pour un capteur 20 de diamètre 15mm (millimètres), tel qu'une caméra grand angle, la distance d est de 1cm. Dans un exemple non limitatif, pour un capteur 20 de dimensions 20cm-5cm, tel qu'un lidar, la distance d est de 5cm.

Dans un mode de réalisation non limitatif, une buse de projection 332 est associée à une électrovanne 3340. Ainsi, le module de répartition 334 comporte autant d'électrovannes 3340 que de buses de projection 332, de sorte que la délivrance du fluide de nettoyage F par une buse de projection 332 donnée est gouvernée par le pilotage d'une électrovanne 3340 et une seule. Les électrovannes 3340 sont pilotées par l'unité de contrôle électronique 32.

Dans un mode de réalisation non limitatif, la pompe de nettoyage 330 est une pompe électronisée gouvernée par un moteur électrique. Dans un mode de réalisation non limitatif, le moteur électrique est un moteur sans balais, dit « brushless » en anglais. Cela permet de garantir la fiabilité de la pompe de nettoyage 330 comparé à une pompe de nettoyage à moteur électrique à balais. La pompe de nettoyage 330 est alimentée par une tension d'alimentation U1. La tension d'alimentation U1 de la pompe de nettoyage 330 peut être modifiée sur la base d'un signal à modulation de largeur d'impulsions PWM. Cela permet la modification de la vitesse de rotation du moteur électrique. La modification de la vitesse de rotation modifie la pression P1 du fluide de nettoyage F en sortie de la pompe de nettoyage 330. Notamment, une augmentation de la vitesse de rotation conduit à une augmentation de la pression P1 du fluide de nettoyage F. On peut ainsi adapter la pression P1 du fluide de nettoyage F en sortie de la pompe de nettoyage 330 de sorte que cette dernière fournisse une pression P1 déterminée pour envoyer ledit fluide de nettoyage F dans une buse de projection 232 à un débit D1 donné.

Tel qu'illustré sur la [Fig.1], le procédé de nettoyage 1 comprend les étapes suivantes.

Dans une étape E1 illustrée F1(31, 200), le dispositif de détection 31 détecte si la surface 200 du capteur 20 est sale. Soit la détection est faite par le capteur 20 lui-même, soit la détection est faite directement par l'unité de contrôle électronique 32. Lorsque la détection est réalisée par le capteur 20 lui-même, ce dernier envoie une requête de nettoyage Rq à l'unité de contrôle électronique 32. Dans un mode de réalisation non limitatif, l'unité de contrôle électronique 32 reçoit une pluralité de requêtes de nettoyage Rq provenant de N capteurs 20, avec N=1 à m, avec m entier. Dans un exemple non limitatif pris dans la suite de la description, trois capteurs 20 sont à nettoyer simultanément. Ainsi, l'unité de contrôle électronique 32 reçoit trois requêtes de nettoyage Rq provenant chacune des trois capteurs 20 à nettoyer.

Dans un mode de réalisation non limitatif, cette étape de détection comprend une détection d'un niveau de salissure de la surface 200 à nettoyer. Cela va permettre par la suite de modifier le ou les paramètres de nettoyage p1 décrits plus loin, en fonction de ce niveau de salissure et de permettre ainsi un nettoyage plus ciblé et donc plus efficace.

Dans une étape E2 illustrée F2(32, 21, 0), l'unité de contrôle électronique 32 déclenche un compteur de nettoyage 21 si la surface 200 est sale. Dans un exemple non limitatif, ce compteur 21 est au départ initialisé à la valeur 0. Par déclenchement, on entend qu'il l'active.

Dans une étape E3 illustrée F3(32, ph1, p1(D1, P1, T1, C1)), l'unité de contrôle électronique 32 active une phase de nettoyage primaire ph1 en fonction d'au moins un paramètres de nettoyage p1. Par activation, on entend que l'unité de contrôle électronique 32 envoie une commande (non illustrée) au dispositif de nettoyage 33, ladite commande comprenant les paramètres de nettoyage p1 pour que ce dernier exécute la phase de nettoyage primaire ph1 en fonction desdits paramètres de nettoyage p1. La phase de nettoyage primaire Ph1 est une phase de nettoyage normale.

Dans des exemples non limitatifs, ledit au moins un paramètre de nettoyage p1 est :
- un débit D1 d'un fluide de nettoyage F,
- une pression P1 d'un fluide de nettoyage F,
- une température T1 d'un fluide de nettoyage F,
- une composition C1 d'un fluide de nettoyage F.

Ainsi, les paramètres de nettoyages p1 ont des valeurs initiales définies. Dans des modes de réalisation non limitatifs, le fluide de nettoyage F est de l'eau ou un liquide lave-glace.

Dans un mode de réalisation non limitatif, l'activation est réalisée en fonction de plusieurs paramètres de nettoyage p1.

Dans une étape E4 illustrée F4(33, ph1, F1, p1), le dispositif de nettoyage 33 exécute la phase de nettoyage primaire ph1 avec le ou les paramètres de nettoyage p1. La phase de nettoyage primaire ph1 est réalisée avec un fluide de nettoyage primaire F1. Ainsi, la pompe de nettoyage 330 est commandée en un programme normal.

La pompe de nettoyage 20 est pilotée par l'unité de contrôle électronique 32 au moyen d'un signal à modulation de largeur d'impulsions PWM, en fonction des besoins capteurs, à savoir en fonction du nombre N de capteurs 20 à nettoyer simultanément. La pompe de nettoyage 330 assure l'acheminement du fluide de nettoyage primaire F1 dans les canalisations 333 jusqu'aux buses de projection 332 des capteurs 20 qui doivent être nettoyés.

Dans le cas d'utilisation d'un solénoïde 336, ce dernier est piloté par l'unité de contrôle électronique 32 pour ouvrir la pluralité d'électrovannes 3340 pour que le fluide de nettoyage primaire F1 arrive jusqu'aux buses de projection 332 qui correspondent aux capteurs 20 qui doivent être nettoyés.

Dans une étape E5 illustrée F5(31, 200), le dispositif de détection 31 vérifie si la surface 200 à nettoyer est propre,

Si ladite surface 200 à nettoyer est propre suite à ladite phase de nettoyage primaire ph1 (branche A1), dans une étape E6 illustrée F6(32, 21, 0), ledit compteur de nettoyage 21 est réinitialisé. Il est réinitialisé par l'unité de contrôle électronique 32. Et, dans une étape E7 illustrée F7(33, ph1), le dispositif de nettoyage 33 arrête l'exécution de la phase de nettoyage primaire ph1. A cet effet, l'unité de contrôle électronique 32 pilote la pompe de nettoyage 330 pour qu'elle arrête l'envoi du fluide de nettoyage primaire F1 dans les canalisations 333 et pilote le solénoïde 336 pour qu'il ferme la pluralité d'électrovannes 3340. Cela implique ainsi que l'unité de contrôle électronique 32 a désactivé l'exécution de la phase de nettoyage primaire ph1. Par désactivation, on entend que l'unité de contrôle électronique 32 a envoyé une commande (non illustrée) au dispositif de nettoyage 33 pour qu'il arrête la phase de nettoyage primaire ph1.

Si la surface 200 n'est pas propre (branche A2), alors dans une étape E8 illustrée F8(32, 21, +1), ledit compteur de nettoyage 21 est incrémenté. Il est incrémenté par l'unité de contrôle électronique 32.

Si ledit compteur de nettoyage 21 est inférieur à un seuil primaire th1, dans une étape E9 illustrée F9(33, 21, th1, ph1) le dispositif de nettoyage 33 réitère la phase de nettoyage primaire ph1. Cela permet de nettoyer de nouveau la surface 200 du capteur 20. Dans un mode de réalisation non limitatif, le seuil primaire th1 est égal à 3.

Dans un mode de réalisation non limitatif, le seuil primaire th1 est adapté en fonction de la nature du capteur 20. Ainsi, dans un exemple non limitatif, un lidar peut être plus critique pour le fonctionnement du véhicule automobile 2 autonome ou semi-autonome qu'une caméra de recul. Dans le cas d'un lidar, S1=4 dans un exemple non limitatif, et dans le cas d'une caméra de recul, S1=3 dans un exemple non limitatif. Dans un mode de réalisation non limitatif, le seuil primaire th1 est adapté en fonction de paramètres ambiants. Dans des exemples non limitatifs, les paramètres ambiants sont des paramètres météorologiques tels que la pluie ou la neige, ou encore la température extérieure. Ainsi, dans un exemple non limitatif, s'il neige, ou s'il pleut S1=3 dans un exemple non limitatif, et si ce n'est pas le cas, S1=2 dans un exemple non limitatif. Ainsi, dans un exemple non limitatif, si la température extérieure est inférieure à 0, cela voudrait dire que les routes ont été salées (il risque d'y avoir du sel sur la surface 200), alors S1=3 dans un exemple non limitatif, et si ce n'est pas le cas, S1=2 dans un exemple non limitatif.

On réitère les étapes E4 à E8 (branche A3) jusqu'à ce que la surface 200 soit propre ou jusqu'à atteindre le seuil primaire th1 si la surface 200 n'est toujours pas propre.

Si le seuil primaire th1 est atteint, cela signifie que la phase de nettoyage primaire ph1 n'est pas efficace. Il faut changer le ou les paramètres de nettoyage p1 et/ou le fluide de nettoyage primaire F1. Ainsi, la phase primaire ph1 ne peut être exécutée que pendant th1 fois, soit trois fois dans l'exemple non limitatif pris de th1 égal à 3. Si on atteint cette limite sans avoir pu nettoyer correctement la surface 200, cela ne sert à rien de continuer une phase de nettoyage normale. Cela consommerait trop de fluide de nettoyage primaire F1 sans être efficace.

On effectue alors une phase de nettoyage plus efficace de la manière suivante.

Si ledit compteur de nettoyage 21 est égal audit seuil primaire th1 (branche A4), dans une étape E10 illustrée F10(33, ph1) le dispositif de nettoyage 31 arrête l'exécution de la phase de nettoyage primaire ph1. Cela implique que l'unité de contrôle électronique 32 a désactivé l'exécution de la phase de nettoyage primaire ph1.

Dans une étape E11 illustrée F11(32, ph2, p1(D1, P1, T1, C1)) l'unité de contrôle électronique 32 active une phase de nettoyage secondaire ph2 avec ledit au moins un paramètre de nettoyage p1 modifié. La phase de nettoyage secondaire ph2 est réalisée avec un fluide de nettoyage secondaire F2. Par activation, on entend que l'unité de contrôle électronique 32 envoie une commande (non illustrée) au dispositif de nettoyage 33, ladite commande comprenant les paramètres de nettoyage p1 modifiés pour que ce dernier exécute la phase de nettoyage secondaire ph2 en fonction desdits paramètres de nettoyage p1 modifiés.

Dans un mode de réalisation non limitatif, plusieurs paramètres de nettoyage p1 sont modifiés.

Ainsi, on peut augmenter le débit D1 du fluide de nettoyage secondaire F2. Cela permet de nettoyer plus facilement certains types de salissures par exemple celles qui se dissolvent plus facilement dans un fluide. Ainsi, on peut augmenter la pression P1 du fluide de nettoyage secondaire F2. Cela permet d'avoir un nettoyage plus puissant et donc plus rapide. Ainsi, on peut augmenter la température T1 du fluide de nettoyage secondaire F2. Cela permet d'enlever plus efficacement les tâches de boue par exemple. Ainsi, on peut modifier la composition C1 du fluide de nettoyage secondaire F2. En effet, dans un mode de réalisation non limitatif, le fluide de nettoyage secondaire F2 est le même que le fluide de nettoyage primaire F1, ou est composé du fluide de nettoyage primaire F1 et d'un fluide additionnel F3 ou est différent du fluide de nettoyage primaire F1. Dans un exemple de réalisation non limitatif, au lieu de l'eau on peut utiliser de l'eau avec un solvant ou de l'eau avec un détergent. Dans un exemple de réalisation non limitatif, le fluide additionnel F3 est un solvant. Cela permet d'enlever plus efficacement les tâches d'insecte par exemple. Ainsi, la phase de nettoyage secondaire Ph2 est une phase de nettoyage plus intensive que la phase de nettoyage primaire Ph1, cette dernière étant une phase de nettoyage normale.

Pour augmenter la température du fluide de nettoyage secondaire F2, dans un mode de réalisation non limitatif, le système de nettoyage 3 comprend des résistances placées près du réservoir de stockage 331.

Dans une étape E12 illustrée F12(33, ph2, F2, p1), le dispositif de nettoyage 33 exécute la phase de nettoyage secondaire ph2. Ainsi, la pompe de nettoyage 330 est commandée en un programme intensif.

De la même manière que pour la phase de nettoyage primaire ph1, on teste si la surface 200 est propre ou encore sale.

Ainsi, dans une étape E13 illustrée F13(31, 200), le dispositif de détection 31 vérifie si la surface 200 à nettoyer est propre,

Si ladite surface 200 à nettoyer est propre suite à ladite phase de nettoyage secondaire ph2 (branche A5), dans une étape E14 illustrée F14(32, 21, 0), ledit compteur de nettoyage 21 est réinitialisé. Il est réinitialisé par l'unité de contrôle électronique 32.

Dans une étape E15 illustrée F15(33, ph2), Le dispositif de nettoyage 33 arrête l'exécution de la phase de nettoyage secondaire ph2. A cet effet, l'unité de contrôle électronique 32 pilote la pompe de nettoyage 330 pour qu'elle arrête l'envoi du fluide de nettoyage primaire F1 dans les canalisations 333 et pilote le solénoïde 336 pour qu'il ferme la pluralité d'électrovannes 3340. Cela implique ainsi que l'unité de contrôle électronique 32 a désactivé l'exécution de la phase de nettoyage secondaire ph2. Par désactivation, on entend que l'unité de contrôle électronique 32 a envoyé une commande (non illustrée) au dispositif de nettoyage 33 pour qu'il arrête la phase de nettoyage secondaire ph2.

Si la surface 200 n'est pas propre (branche A6), alors dans une étape E16 illustrée F16(32, 21, +1), ledit compteur de nettoyage 21 est incrémenté. Il est incrémenté par l'unité de contrôle électronique 32.

Si ledit compteur de nettoyage 21 est inférieur à un seuil primaire th1, dans une étape E17 illustrée F17(33, 21, th2, ph2) le dispositif de nettoyage 33 réitère la phase de nettoyage secondaire ph2. Cela permet de nettoyer de nouveau la surface 200 du capteur 20 avec le fluide de nettoyage secondaire F2 et le ou les paramètres de nettoyage p1 qui ont été modifiés. Dans un mode de réalisation non limitatif, le seuil secondaire th2 est égal à 5.

On réitère les étapes E13 à E17 (branche A7) jusqu'à ce que la surface 200 soit propre ou jusqu'à atteindre le seuil secondaire th2 si la surface 200 n'est toujours pas propre. Ainsi, la phase secondaire ph2 ne peut être exécutée que pendant un nombre égal à th2-th1 fois, soit deux fois dans l'exemple non limitatif pris de th2 égal à 5. De même que pour le seuil primaire th1, dans un mode de réalisation non limitatif, le seuil secondaire th2 est adapté en fonction de la nature du capteur 20. Ainsi, dans un exemple non limitatif, un lidar peut être plus critique pour le fonctionnement du véhicule autonome ou semi-autonome qu'une caméra de recul. Dans le cas d'un lidar, S2=2 dans un exemple non limitatif, et dans le cas d'une caméra de recul, S2=1 dans un exemple non limitatif. En outre, de même que pour le seuil primaire th1, En outre, dans un mode de réalisation non limitatif, le seuil secondaire th2 est adapté en fonction de paramètres ambiants. Dans des exemples non limitatifs, les paramètres ambiants sont des paramètres météorologiques tels que la pluie ou la neige, ou encore la température extérieure. Ainsi, dans un exemple non limitatif, s'il neige, ou s'il pleut S2=5 dans un exemple non limitatif, et si ce n'est pas le cas, S2=4 dans un exemple non limitatif. Ainsi, dans un exemple non limitatif, si la température extérieure est inférieure à 0, cela voudrait dire que les routes ont été salées, alors S2=5 dans un exemple non limitatif, et si ce n'est pas le cas, S2=3 dans un exemple non limitatif.

Si le seuil secondaire th2 est atteint, cela signifie que la phase de nettoyage secondaire ph2 n'est pas non plus efficace pour avoir une surface 200 propre. Cela ne sert à rien de continuer également cette phase de nettoyage secondaire ph2. A ce moment, dans une étape E18 illustrée F18(32, 21, 0), l'unité de contrôle électronique 32 réinitialise le compteur de nettoyage 21, ici à zéro, et dans une étape E19 illustrée F19(33, ph2), le dispositif de nettoyage 33 arrête l'exécution de la phase de nettoyage secondaire ph2. Cela implique ainsi que l'unité de contrôle électronique 32 a ainsi désactivé l'exécution de la phase de nettoyage secondaire ph2.

Enfin, dans une étape E20 illustrée F20(32, f1) l'unité de contrôle électronique 32 exécute la fonction de sécurisation f1 dudit véhicule automobile 2. Cette fonction de sécurisation f1 dudit véhicule automobile 2 est une fonction f1 d'information ou permet l'utilisation du véhicule automobile 2 en mode dégradé ou interdit l'utilisation du véhicule automobile 2.

Ainsi, dans des modes de réalisation non limitatifs, la fonction de sécurisation f1 est :
- un message envoyé à une interface homme machine dudit véhicule 2 pour indiquer l'obligation d'une maintenance,
- désactiver la ou les fonctions dudit véhicule automobile 2 qui dépendent d'une détection dudit capteur 20,
- une navigation automatique dudit véhicule automobile 2 sur une base de maintenance.

Ainsi, le message permettra d'indiquer que un ou des capteurs 20 ne sont pas nettoyés correctement ce qui entraînent un problème sur leur fonction de détection et qu'ils doivent être nettoyés manuellement.

Ainsi, dans des modes de réalisation non limitatifs, la ou les fonctions qui peuvent être désactivées sans porter atteinte à la sécurité des occupants du véhicule automobile 2 sont des fonctions d'aide à la conduite telles que dans des exemples non limitatifs l'aide au dépassement, l'aide à la marche arrière, l'aide au stationnement, ou encore des fonctions de conduite autonome telle que dans un exemple non limitatif, la fonction de stationnement autonome.

Cette fonction de sécurisation f1 permet ainsi de sécuriser le véhicule automobile 2 notamment lorsqu'il est autonome ou semi-autonome. Par conséquent, la sécurité des occupants dudit véhicule automobile 2 est préservée.

Ainsi, le procédé de nettoyage 1 est mis en œuvre par un système de nettoyage 3 d'au moins un capteur 20 d'un véhicule 2, ledit capteur 20 comprenant une surface 200 à nettoyer.

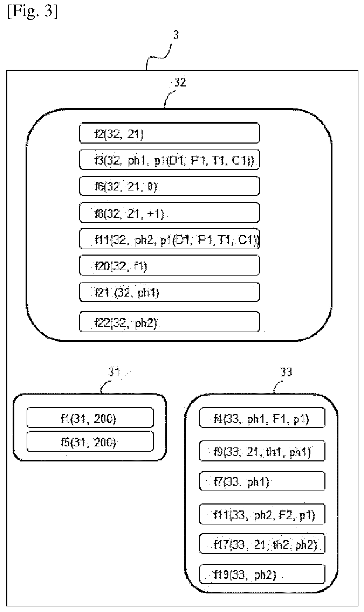

Tel qu'illustré sur la [Fig.3], dans un mode de réalisation non limitatif, le système de nettoyage 3 comprend :
- le dispositif de détection 31,
- l'unité de contrôle électronique 32, et
- le dispositif de nettoyage 33.

Le dispositif de détection 31 est configuré pour détecter si ladite surface 200 à nettoyer dudit capteur 20 est sale (fonction illustrée sur la [Fig.3] f1(31, 200)) et vérifier si elle est propre (fonction illustrée sur la [Fig.3] f5(31, 200)).

L'unité de contrôle électronique 32 est configurée pour :
- déclencher le compteur de nettoyage 21 si la surface 200 est sale (fonction illustrée sur la [Fig.3] f2(32, 21)),
- activer une phase de nettoyage primaire ph1 en fonction de paramètres de nettoyage p1 (fonction illustrée sur la [Fig.3] f3(32, ph1, p1(D1, P1, T1, C1),
- si ladite surface 200 à nettoyer est propre suite à ladite phase de nettoyage primaire ph1, réinitialiser ledit compteur de nettoyage 21 (fonction illustrée sur la [Fig.3] f6(32, 21, 0)),
- sinon incrémenter ledit compteur de nettoyage 21 (fonction illustrée sur la [Fig.3] f8(32, 21, +1)),
- si ledit compteur de nettoyage 21 est égal audit seuil primaire th1, activer une phase de nettoyage secondaire ph2 avec au moins un paramètre de nettoyage p1 modifié (fonction illustrée sur la [Fig.3] f11(32, ph2, p1(D1, P1, T1, C1)),
- si ladite surface 200 est propre suite à ladite phase de nettoyage secondaire ph2, réinitialiser ledit compteur de nettoyage 21 (fonction f6), sinon incrémenter ledit compteur de nettoyage 21 (fonction f8),
- si ledit compteur de nettoyage 21 est inférieur à un seuil secondaire th2, activer ladite phase de nettoyage secondaire ph2 (fonction f11), et si ledit compteur de nettoyage 21 est égal audit seuil secondaire th2, réinitialiser ledit compteur de nettoyage 21 (fonction f6)), et exécuter une fonction de sécurisation f1 dudit véhicule 2 (fonction illustrée sur la [Fig.3] f20(32, f1)).

L'unité de contrôle électronique 32 est en outre configurée pour :
- désactiver ladite phase de nettoyage primaire ph1 (fonction illustrée sur la [Fig.3] f21(32, ph1)) si ladite surface 200 est propre suite à ladite phase de nettoyage primaire ph1 ou si ledit compteur de nettoyage 21 est égal audit seuil primaire th1, ,
- désactiver ladite phase de nettoyage secondaire ph2 (fonction illustrée sur la [Fig.3] f22(32, ph2)) si ladite surface 200 est propre suite à ladite phase de nettoyage secondaire ph2 ou si ledit compteur de nettoyage 21 est égal audit seuil secondaire th2.

Le dispositif de nettoyage 33 est configuré pour :
- exécuter ladite phase de nettoyage primaire ph1 (fonction illustrée sur la [Fig.3] f4(33, ph1, F1, p1)),
- réitérer ladite phase de nettoyage primaire ph1 (fonction illustrée sur la [Fig.3] f9(33, 21, th1, ph1)).
- arrêter l'exécution de ladite phase de nettoyage primaire ph1 (fonction illustrée sur la [Fig.3] f7(33, ph1)),
- exécuter ladite phase de nettoyage secondaire ph2 (fonction illustrée sur la [Fig.3] f11(33, ph2, F2, p1)),
- réitérer ladite phase de nettoyage secondaire ph2 (fonction illustrée sur la [Fig.3] f17(33, 21, th2, ph2)),
- arrêter l'exécution de ladite phase de nettoyage secondaire ph2 (fonction illustrée sur la [Fig.3] f19(33, ph2)).

Le dispositif de nettoyage 33 est configuré pour arrêter l'exécution de ladite phase de nettoyage primaire ph1 si l'une des deux conditions suivantes est vérifiée : si la surface 200 à nettoyer est propre suite à la phase de nettoyage primaire ph1 ou si ledit compteur de nettoyage 21 est égal audit seuil primaire th1.

Le dispositif de nettoyage 33 est configuré pour réitérer ladite phase de nettoyage primaire ph1 si les deux conditions suivantes sont vérifiées : si la surface 200 à nettoyer n'est toujours pas propre suite à la phase de nettoyage primaire ph1 et si ledit compteur de nettoyage 21 est inférieur au seuil primaire th1.

Le dispositif de nettoyage 33 est configuré pour arrêter l'exécution de ladite phase de nettoyage secondaire ph2 si l'une des deux conditions suivantes est vérifiée : si la surface 200 à nettoyer est propre suite à la phase de nettoyage secondaire ph2 ou si ledit compteur de nettoyage 21 est égal audit seuil secondaire th2.

Le dispositif de nettoyage 33 est configuré pour réitérer ladite phase de nettoyage secondaire ph2 si les deux conditions suivantes sont vérifiées : si la surface 200 à nettoyer n'est toujours pas propre suite à la phase de nettoyage secondaire ph2 et si ledit compteur de nettoyage 21 est inférieur au seuil secondaire th2.

Dans des modes de réalisation non limitatifs, l'unité de contrôle électronique 32 est embarqué ou non dans un capteur 20, ou est l'unité de contrôle électronique principale du véhicule automobile 2 qui s'occupe notamment du contrôle moteur, ou est une unité de contrôle électronique secondaire.

Bien entendu la description de l'invention n'est pas limitée aux modes de réalisation décrits ci-dessus et au domaine décrit ci-dessus. Ainsi, le compteur de nettoyage 21 peut être décrémenté au lieu d'être incrémenté. Ainsi, à chaque changement de phase de nettoyage, le compteur de nettoyage 21 peut être réinitialisé. Dans ce cas, le seuil secondaire th2 est égal à 2 au lieu de 5 dans un mode de réalisation non limitatif.

Ainsi, l'invention décrite présente notamment les avantages suivants :
- elle permet d'avoir une bonne efficacité de nettoyage tout en garantissant la sécurité des occupants du véhicule 2,
- grâce à la comptabilisation du nombre de phase de nettoyage primaire ph1 ou de phase de nettoyage secondaire ph2 et la comparaison respectivement avec un seuil primaire th1 associé et un seuil secondaire th2 associé, elle permet de limiter la consommation en fluide de nettoyage F (que ce soir le fluide de nettoyage primaire F1 ou le fluide de nettoyage secondaire F2) et empêche que le ou les réservoirs de stockage 331 ne se vide trop vite,
- grâce aux différents paramètres de nettoyage p1, elle permet un nettoyage plus ciblé et par conséquent plus efficace de la surface 200 à nettoyer,
- c'est une solution peu coûteuse et facile à mettre en œuvre.

## Revendications

1. Procédé de nettoyage (1) d'au moins un capteur (20) d'un véhicule (2), ledit au moins un capteur (20) comprenant une surface (200) à nettoyer, ledit procédé de nettoyage (1) comprenant les étapes de :
- détecter (E1) si ladite surface (200) dudit capteur (20) est sale,
- déclencher (E2) un compteur de nettoyage (21) si ladite surface (200) est sale,
- activer (E3) une phase de nettoyage primaire (ph1) en fonction d'au moins un paramètre de nettoyage (p1),
- exécuter (E4) la phase de nettoyage primaire (ph1),
- vérifier (E5) si ladite surface (200) est propre,
- si ladite surface (200) est propre suite à ladite phase de nettoyage primaire (ph1), réinitialiser (E6) ledit compteur de nettoyage (21) et arrêter (E7) l'exécution de ladite phase de nettoyage primaire (ph1),
- sinon incrémenter (E8) ledit compteur de nettoyage (21), et si ledit compteur de nettoyage (21) est inférieur à un seuil primaire (th1), réitérer (E9) ladite phase de nettoyage primaire (ph1), le procédé étant **caractérisé en ce qu'**il comprends de plus les étapes suivantes:
- si ledit compteur de nettoyage (21) est égal audit seuil primaire (th1), arrêter (E10) l'exécution de ladite phase de nettoyage primaire (ph1) et activer (E11) une phase de nettoyage secondaire (ph2) avec ledit au moins un paramètre de nettoyage (p1) modifié,
- exécuter (E12) ladite phase de nettoyage secondaire (ph2),
- vérifier (E13) si ladite surface (200) est propre,
- si ladite surface (200) est propre suite à ladite phase de nettoyage secondaire (ph2), réinitialiser (E14) ledit compteur de nettoyage (21) et arrêter (E15) l'exécution de ladite phase de nettoyage secondaire (ph2),
- sinon incrémenter (E16) ledit compteur de nettoyage (21) et si ledit compteur de nettoyage (21) est inférieur à un seuil secondaire (th2), réitérer (E17) ladite phase de nettoyage secondaire (ph2), et si ledit compteur de nettoyage (21) est égal audit seuil secondaire (th2), réinitialiser (E18) ledit compteur de nettoyage (21), arrêter (E19) l'exécution de ladite phase de nettoyage secondaire (ph2), et exécuter (E20) une fonction de sécurisation (f1) dudit véhicule (2).

2. Procédé de nettoyage (1) selon la revendication 1, selon lequel ledit au moins un paramètre de nettoyage (p1) est :
- un débit (D1) d'un fluide de nettoyage primaire (F),
- une pression (P1) d'un fluide de nettoyage primaire (F),
- une température (T1) d'un fluide de nettoyage primaire (F),
- une composition (C1) d'un fluide de nettoyage primaire (F).

3. Procédé de nettoyage (1) selon l'une quelconque des revendications précédentes, selon lequel ladite phase de nettoyage primaire (ph1) est réalisée avec un fluide de nettoyage primaire (F1) et ladite phase de nettoyage secondaire (ph2) est réalisée avec un fluide de nettoyage secondaire (F2) qui est le même que le fluide de nettoyage primaire (F1) ou qui est composé dudit fluide de nettoyage primaire (F1) et d'un fluide additionnel (F3).

4. Procédé de nettoyage (1) selon la revendication 1 ou la revendication 2, selon lequel ladite phase de nettoyage primaire (ph1) est réalisée avec un fluide de nettoyage primaire (F1) et ladite phase de nettoyage secondaire (ph2) est réalisée avec un fluide de nettoyage secondaire (F2) différent du fluide de nettoyage primaire (F1).

5. Procédé de nettoyage (1) selon l'une quelconque des revendications précédentes, selon lequel ledit seuil primaire (th1) est égal à 3.

6. Procédé de nettoyage (1) selon l'une quelconque des revendications précédentes, selon lequel ledit seuil secondaire (th2) est égal à 5.

7. Procédé de nettoyage (1) selon l'une quelconque des revendications précédentes, selon lequel ladite fonction de sécurisation (f1) est :
- un message envoyé à une interface homme machine dudit véhicule (2) pour indiquer l'obligation d'une maintenance,
- désactiver la ou les fonctions dudit véhicule (2) qui dépendent d'une détection dudit capteur (20),
- une navigation automatique dudit véhicule (2) sur une base de maintenance.

8. Procédé de nettoyage (1) selon l'une quelconque des revendications précédentes, selon lequel ledit seuil primaire (th1) et ledit seuil secondaire (th2) sont adaptés en fonction de la nature dudit au moins un capteur (20).

9. Procédé de nettoyage (1) selon l'une quelconque des revendications précédentes, selon lequel ledit seuil primaire (th1) et ledit seuil secondaire (th2) sont adaptés en fonction de paramètres ambiants.

10. Système de nettoyage (3) d'au moins un capteur (20) d'un véhicule (2), ledit au moins un capteur (20) comprenant une surface (200) à nettoyer, ledit système de nettoyage (3) comprenant:
- (a) un dispositif de détection (31) configuré pour détecter si ladite surface (200) dudit au moins un capteur (20) est sale ou propre,
- (b) une unité de contrôle électronique (32) configurée pour :
- activer une phase de nettoyage primaire (ph1) en fonction de paramètres de nettoyage (p1),
- si ladite surface (200) est propre suite à ladite phase de nettoyage primaire (ph1), réinitialiser ledit compteur de nettoyage (21), sinon incrémenter ledit compteur de nettoyage (21),
- si ledit compteur de nettoyage (21) est égal audit seuil primaire (th1), activer une phase de nettoyage secondaire (ph2) avec au moins un paramètre de nettoyage (p1) modifié,
- si ladite surface (200) est propre suite à ladite phase de nettoyage secondaire (ph2), réinitialiser ledit compteur de nettoyage (21), sinon incrémenter ledit compteur de nettoyage (21),
- si ledit compteur de nettoyage (21) est égal audit seuil secondaire (th2), réinitialiser ledit compteur de nettoyage (21) et exécuter une fonction de sécurisation (f1) dudit véhicule (2),
- (c) un dispositif de nettoyage (33) configuré pour :
- exécuter ladite phase de nettoyage primaire (ph1), réitérer ladite phase de nettoyage primaire (ph1) si ladite surface (200) n'est toujours pas propre suite à la phase de nettoyage primaire (ph1) et si ledit compteur de nettoyage (21) est inférieur au seuil primaire (th1),
- arrêter l'exécution de ladite phase de nettoyage primaire (ph1) si ladite surface (200) est propre suite à la phase de nettoyage primaire (ph1) ou si ledit compteur de nettoyage (21) est égal audit seuil primaire (th1),
- exécuter ladite phase de nettoyage secondaire (ph2),
- réitérer ladite phase de nettoyage secondaire (ph2) si ladite surface (200) n'est toujours pas propre suite à la phase de nettoyage secondaire (ph2) et si ledit compteur de nettoyage (21) est inférieur au seuil secondaire (th2), et
- arrêter l'exécution de ladite phase de nettoyage secondaire (ph2) si ladite surface (200) est propre suite à la phase de nettoyage secondaire (ph2) ou si ledit compteur de nettoyage (21) est égal audit seuil secondaire (th2).

## Patentansprüche

1. Verfahren zur Reinigung (1) von mindestens einem Sensor (20) eines Fahrzeugs (2), wobei der mindestens eine Sensor (20) eine zu reinigende Oberfläche (200) umfasst, wobei das Reinigungsverfahren (1) die folgenden Schritte umfasst:
- Erkennen (E1), ob die Oberfläche (200) des Sensors (20) verschmutzt ist.
- Auslösen (E2) eines Reinigungszählers (21), wenn die Oberfläche (200) verschmutzt ist.
- Aktivieren (E3) einer primären Reinigungsphase (ph1) in Abhängigkeit von mindestens einem Reinigungsparameter (p1).
- Ausführen (E4) der primären Reinigungsphase (ph1).
- Überprüfen (E5), ob die Oberfläche (200) sauber ist.
- Wenn die Oberfläche (200) nach der primären Reinigungsphase (ph1) sauber ist, Zurücksetzen (E6) des Reinigungszählers (21) und Beenden (E7) der Ausführung der primären Reinigungsphase (ph1).
- Andernfalls Erhöhen (E8) des Reinigungszählers (21), und wenn der Reinigungszähler (21) kleiner als ein primärer Schwellenwert (th1) ist, Wiederholen (E9) der primären Reinigungsphase (ph1), wobei das Verfahren **dadurch gekennzeichnet ist, dass** es zusätzlich die folgenden Schritte umfasst:
- Wenn der Reinigungszähler (21) gleich dem primären Schwellenwert (th1) ist, Beenden (E10) der Ausführung der primären Reinigungsphase (ph1) und Aktivieren (E11) einer sekundären Reinigungsphase (ph2) mit dem mindestens einen modifizierten Reinigungsparameter (p1).
- Ausführen (E12) der sekundären Reinigungsphase (ph2).
- Überprüfen (E13), ob die Oberfläche (200) sauber ist.
- Wenn die Oberfläche (200) nach der sekundären Reinigungsphase (ph2) sauber ist, Zurücksetzen (E14) des Reinigungszählers (21) und Beenden (E15) der Ausführung der sekundären Reinigungsphase (ph2).
- Andernfalls Erhöhen (E16) des Reinigungszählers (21), und wenn der Reinigungszähler (21) kleiner als ein sekundärer Schwellenwert (th2) ist, Wiederholen (E17) der sekundären Reinigungsphase (ph2), und wenn der Reinigungszähler (21) gleich dem sekundären Schwellenwert (th2) ist, Zurücksetzen (E18) des Reinigungszählers (21), Beenden (E19) der Ausführung der sekundären Reinigungsphase (ph2) und Ausführen (E20) einer Sicherungsfunktion (f1) des Fahrzeugs (2).

2. Reinigungsverfahren (1) nach Anspruch 1, wobei der mindestens eine Reinigungsparameter (p1) Folgendes ist:
- ein Durchfluss (D1) eines primären Reinigungsfluids (F),
- ein Druck (P1) eines primären Reinigungsfluids (F),
- eine Temperatur (T1) eines primären Reinigungsfluids (F),
- eine Zusammensetzung (C1) eines primären Reinigungsfluids (F).

3. Reinigungsverfahren (1) nach einem der vorhergehenden Ansprüche, wobei die primäre Reinigungsphase (ph1) mit einem primären Reinigungsfluid (F1) durchgeführt wird und die sekundäre Reinigungsphase (ph2) mit einem sekundären Reinigungsfluid (F2) durchgeführt wird, das gleich dem primären Reinigungsfluid (F1) ist oder aus dem primären Reinigungsfluid (F1) und einem zusätzlichen Fluid (F3) zusammengesetzt ist.

4. Reinigungsverfahren (1) nach Anspruch 1 oder Anspruch 2, wobei die primäre Reinigungsphase (ph1) mit einem primären Reinigungsfluid (F1) durchgeführt wird und die sekundäre Reinigungsphase (ph2) mit einem sekundären Reinigungsfluid (F2) durchgeführt wird, das sich von dem primären Reinigungsfluid (F1) unterscheidet.

5. Reinigungsverfahren (1) nach einem der vorhergehenden Ansprüche, wobei der primäre Schwellenwert (th1) gleich 3 ist.

6. Reinigungsverfahren (1) nach einem der vorhergehenden Ansprüche, wobei der sekundäre Schwellenwert (th2) gleich 5 ist.

7. Reinigungsverfahren (1) nach einem der vorhergehenden Ansprüche, wobei die Sicherungsfunktion (f1) Folgendes ist:
- eine Nachricht, die an eine Mensch-Maschine-Schnittstelle des Fahrzeugs (2) gesendet wird, um die Notwendigkeit einer Wartung anzuzeigen,
- Deaktivieren der Funktion(en) des Fahrzeugs (2), die von einer Erkennung des Sensors (20) abhängen,
- eine automatische Navigation des Fahrzeugs (2) zu einer Wartungsbasis.

8. Reinigungsverfahren (1) nach einem der vorhergehenden Ansprüche, wobei der primäre Schwellenwert (th1) und der sekundäre Schwellenwert (th2) in Abhängigkeit von der Art des mindestens einen Sensors (20) angepasst werden.

9. Reinigungsverfahren (1) nach einem der vorhergehenden Ansprüche, wobei der primäre Schwellenwert (th1) und der sekundäre Schwellenwert (th2) in Abhängigkeit von Umgebungsparametern angepasst werden.

10. Reinigungssystem (3) für mindestens einen Sensor (20) eines Fahrzeugs (2), wobei der mindestens eine Sensor (20) eine zu reinigende Oberfläche (200) umfasst, wobei das Reinigungssystem (3) Folgendes umfasst:
- (a) eine Erkennungsvorrichtung (31), die konfiguriert ist, um zu erkennen, ob die Oberfläche (200) des mindestens einen Sensors (20) verschmutzt oder sauber ist,
- (b) eine elektronische Steuereinheit (32), die konfiguriert ist, um:
- eine primäre Reinigungsphase (ph1) in Abhängigkeit von Reinigungsparametern (p1) zu aktivieren,
- wenn die Oberfläche (200) nach der primären Reinigungsphase (ph1) sauber ist, den Reinigungszähler (21) zurückzusetzen, andernfalls den Reinigungszähler (21) zu erhöhen,
- wenn der Reinigungszähler (21) gleich dem primären Schwellenwert (th1) ist, eine sekundäre Reinigungsphase (ph2) mit mindestens einem modifizierten Reinigungsparameter (p1) zu aktivieren,
- wenn die Oberfläche (200) nach der sekundären Reinigungsphase (ph2) sauber ist, den Reinigungszähler (21) zurückzusetzen, andernfalls den Reinigungszähler (21) zu erhöhen,
- wenn der Reinigungszähler (21) gleich dem sekundären Schwellenwert (th2) ist, den Reinigungszähler (21) zurückzusetzen und eine Sicherungsfunktion (f1) des Fahrzeugs (2) auszuführen,
- (c) eine Reinigungsvorrichtung (33), die konfiguriert ist, um:
- die primäre Reinigungsphase (ph1) auszuführen, die primäre Reinigungsphase (ph1) zu wiederholen, wenn die Oberfläche (200) nach der primären Reinigungsphase (ph1) immer noch nicht sauber ist und wenn der Reinigungszähler (21) kleiner als der primäre Schwellenwert (th1) ist,
- die Ausführung der primären Reinigungsphase (ph1) zu beenden, wenn die Oberfläche (200) nach der primären Reinigungsphase (ph1) sauber ist oder wenn der Reinigungszähler (21) gleich dem primären Schwellenwert (th1) ist,
- die sekundäre Reinigungsphase (ph2) auszuführen,
- die sekundäre Reinigungsphase (ph2) zu wiederholen, wenn die Oberfläche (200) nach der sekundären Reinigungsphase (ph2) immer noch nicht sauber ist und wenn der Reinigungszähler (21) kleiner als der sekundäre Schwellenwert (th2) ist, und
- die Ausführung der sekundären Reinigungsphase (ph2) zu beenden, wenn die Oberfläche (200) nach der sekundären Reinigungsphase (ph2) sauber ist oder wenn der Reinigungszähler (21) gleich dem sekundären Schwellenwert (th2) ist.

## Claims

1. A method (1) for cleaning at least one sensor (20) of a vehicle (2), said at least one sensor (20) comprising a surface (200) to be cleaned, said cleaning method (1) comprising steps of:
- detecting (E1) whether said surface (200) of said sensor (20) is dirty,
- triggering (E2) a cleaning counter (21) if said surface (200) is dirty,
- activating (E3) a primary cleaning phase (ph1) employing at least one cleaning parameter (p1),
- executing (E4) the primary cleaning phase (ph1),
- checking (E5) whether said surface (200) is clean,
- if said surface (200) is clean following said primary cleaning phase (ph1), resetting (E6) said cleaning counter (21) and stopping (E7) execution of said primary cleaning phase (ph1),
- otherwise incrementing (E8) said cleaning counter (21), and if said cleaning counter (21) is lower than a primary threshold (th1), reiterating (E9) said primary cleaning phase (ph1), the method being **characterized in that** it includes the following steps:
- if said cleaning counter (21) is equal to said primary threshold (th1), stopping (E10) execution of said primary cleaning phase (ph1) and activating (E11) a secondary cleaning phase (ph2) with said at least one cleaning parameter (p1) modified,
- executing (E12) said secondary cleaning phase (ph2),
- checking (E13) whether said surface (200) is clean,
- if said surface (200) is clean following said secondary cleaning phase (ph2), resetting (E14) said cleaning counter (21) and stopping (E15) execution of said secondary cleaning phase (ph2),
- otherwise incrementing (E16) said cleaning counter (21) and if said cleaning counter (21) is lower than a secondary threshold (th2), reiterating (E17) said secondary cleaning phase (ph2), and if said cleaning counter (21) is equal to said secondary threshold (th2), resetting (E18) said cleaning counter (21), stopping (E19) execution of said secondary cleaning phase (ph2), and executing (E20) a function (f1) ensuring safety of said vehicle (2).

2. The cleaning method (1) as claimed in claim 1, wherein said at least one cleaning parameter (p1) is:
- a flow rate (D1) of a primary cleaning fluid (F),
- a pressure (P1) of a primary cleaning fluid (F),
- a temperature (T1) of a primary cleaning fluid (F),
- a composition (C1) of a primary cleaning fluid (F).

3. The cleaning method (1) as claimed in any one of the preceding claims, wherein said primary cleaning phase (ph1) is carried out with a primary cleaning fluid (F1) and said secondary cleaning phase (ph2) is carried out with a secondary cleaning fluid (F2) that is the same as the primary cleaning fluid (F1) or that is composed of said primary cleaning fluid (F1) and of an additional fluid (F3).

4. The cleaning method (1) as claimed in claim 1 or claim 2, wherein said primary cleaning phase (ph1) is carried out with a primary cleaning fluid (F1) and said secondary cleaning phase (ph2) is carried out with a secondary cleaning fluid (F2) different from the primary cleaning fluid (F1).

5. The cleaning method (1) as claimed in any one of the preceding claims, wherein said primary threshold (th1) is equal to 3.

6. The cleaning method (1) as claimed in any one of the preceding claims, wherein said secondary threshold (th2) is equal to 5.

7. The cleaning method (1) as claimed in any one of the preceding claims, wherein said safety-ensuring function (f1) is:
- a message sent to a human-machine interface of said vehicle (2) to indicate the need for maintenance,
- deactivation of the one or more functions of said vehicle (2) that depend on detection by said sensor (20),
- automatic navigation of said vehicle (2) on a maintenance basis.

8. The cleaning method (1) as claimed in any one of the preceding claims, wherein said primary threshold (th1) and said secondary threshold (th2) are configured depending on the nature of said at least one sensor (20).

9. The cleaning method (1) as claimed in any one of the preceding claims, wherein said primary threshold (th1) and said secondary threshold (th2) are configured depending on ambient parameters.

10. A system (3) for cleaning at least one sensor (20) of a vehicle (2), said at least one sensor (20) comprising a surface (200) to be cleaned, said cleaning system (3) comprising:
- (a) a detecting device (31) configured to detect whether said surface (200) of said at least one sensor (20) is dirty or clean,
- (b) an electronic control unit (32) configured to:
- activate a primary cleaning phase (ph1) employing cleaning parameters (p1),
- if said surface (200) is clean following said primary cleaning phase (ph1), resetting said cleaning counter (21), otherwise incrementing said cleaning counter (21),
- if said cleaning counter (21) is equal to said primary threshold (th1), activating a secondary cleaning phase (ph2) with at least one cleaning parameter (p1) modified,
- if said surface (200) is clean following said secondary cleaning phase (ph2), resetting said cleaning counter (21), otherwise incrementing said cleaning counter (21),
- if said cleaning counter (21) is equal to said secondary threshold (th2), resetting said cleaning counter (21) and executing a function (f1) ensuring safety of said vehicle (2),
- (c) a cleaning device (33) configured to:
- execute said primary cleaning phase (ph1), reiterate said primary cleaning phase (ph1) if said surface (200) is still not clean following the primary cleaning phase (ph1) and if said cleaning counter (21) is lower than the primary threshold (th1),
- stop execution of said primary cleaning phase (ph1) if said surface (200) is clean following the primary cleaning phase (ph1) or if said cleaning counter (21) is equal to said primary threshold (th1),
- execute said secondary cleaning phase (ph2),
- reiterate said secondary cleaning phase (ph2) if said surface (200) is still not clean following the secondary cleaning phase (ph2) and if said cleaning counter (21) is lower than the secondary threshold (th2), and
- stop execution of said secondary cleaning phase (ph2) if said surface (200) is clean following the secondary cleaning phase (ph2) or if said cleaning counter (21) is equal to said secondary threshold (th2).
